# EUROPEAN PATENT APPLICATION

(11) **EP 1 146 413 A2**
(43) Date of publication of application: **17.10.2001**
(21) Application number: 01303453.3
(22) Date of filing: 12.04.2001
(51) Int. Cl.: G06F 1/10, H04L 7/02, H04J 3/04

(54) **Data signal that mimics a clock signals**

(30) Priority: 12.04.2000 US 547428
(71) Applicant: Hewlett-Packard Company, Palo Alto, CA 94304 (US)
(72) Inventor: Wickeraad, John a., Granite Bay, California 95746 (US)
(74) Representative: Powell, Stephen David

(57) **Abstract**

A clock signal is converted into a data signal that mimics the clock signal by 1) dividing the clock signal by two to form a divided clock signal, 2) performing an exclusive-OR operation on the divided clock signal delayed by one half of a period of the clock signal and the divided clock signal delayed by a full period of the clock signal, 3) inverting the result of the exclusive-OR operation, and 4) aligning the inverted result of the exclusive-OR operation with the clock signal to form the data signal that mimics the clock signal, which in turn is provided to data inputs that must be driven by the clock signal. Timing verification is performed upon circuits having data inputs that must be driven by clock signals.

## Description

The present invention relates to data/clock signals and in particular to a method and apparatus for generating a data signal that mimics a clock signal. More specifically, the present invention provides a circuit that transfers a clock signal from a clock domain to a data domain, thereby allowing timing analysis to be performed on a circuit that uses a clock signal as a data input.

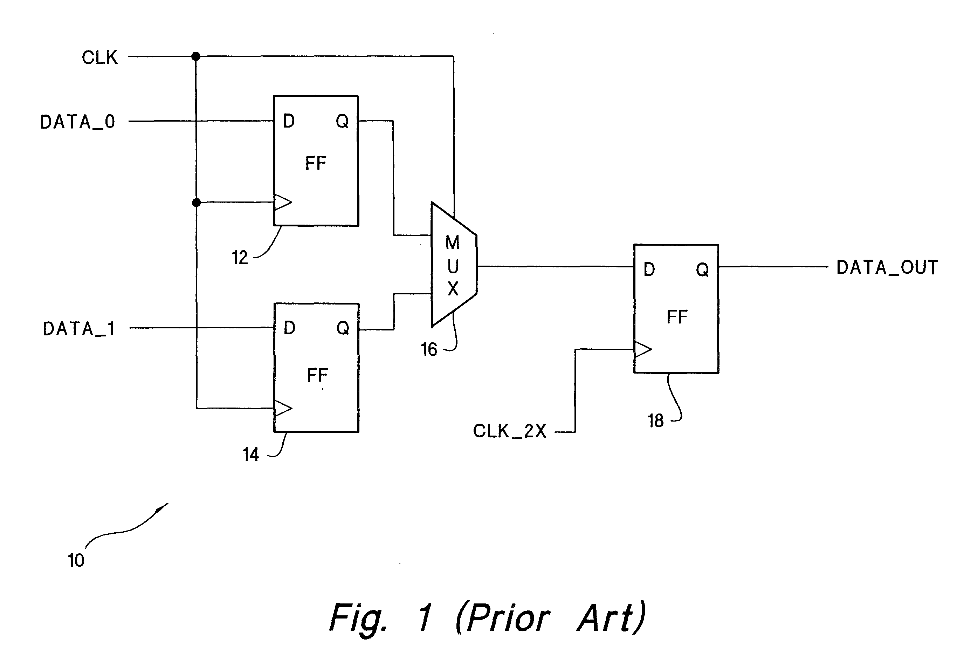

In the art of computer design, it is often desirable to use a clock signal as a data signal. For example, when moving data from a slower clock domain to a faster clock domain, it is common to use the slower clock signal as an input to a multiplexer to select the data to be transferred for any particular edge of the faster clock signal. A simple illustration of this is shown in Figure 1.

Figure 1 shows a prior art circuit 10 that transfers data from the clock domain of the clock signal CLK to the clock domain of the clock signal CLK_2X. The two clock signals have a'known phase relationship with respect to each other such that both the rising and falling edges of CLK occur just after the active edge of CLK_2X, and the frequency of CLK_2X is twice that of CLK. Such a phase relationship will exist, for example, if a simple divide-by-two flip flop is used to generate the signal clock CLK from the signal CLK_2X.

In circuit 10, flip flop 12 receives data signal DATA_0 and flip flop 14 receives data signal DATA_1. Both flip flops 12 and 14 are clocked by the clock signal CLK. Multiplexer (MUX) 16 receives as data inputs the outputs of flip flops 12 and 14, and receives the clock signal CLK as a select input. Accordingly, when CLK is low flip flop 12 is selected, and when CLK is high flip flop 14 is selected.

The output of MUX 16 is provided to flip flop 18. Flip flop 18 is clocked by the clock signal CLK_2X and moves the output of MUX 16 into the clock domain of CLK_2X. The output signal DATA_OUT of circuit 10 is provided at the output of flip flop 18. Of course, there are many other situations where it may be desirable to use a clock signal as a data signal, and circuit 10 is merely representative.

As is known in the art, logic designers often use timing verification tools to verify that a given logic design will function properly at a given frequency. These tools typically calculate clock skew as a clock signal is fanned out to flip flops, and then verify that data arrives at each flip flop in time to satisfy the setup and hold times of that flip flop. Many commonly used timing verification tools have difficulty when a clock signal is used as a data input, and produce an error when this condition is detected. For example, many timing verification tools will not be able to calculate when the output of MUX 16 arrives at the input flip flop 18 in circuit 10 because the select input of MUX 16 is driven by the clock signal CLK. Often logic designers will need to verify that such a circuit will function properly by performing manual calculations.

The present invention is a method and apparatus for generating a data signal that mimics a clock signal. In many digital circuits, it is desirable to use a clock signal as a data input to a functional block. For example, when data is being moved from one clock domain to another, it is common to provide the clock signal to a select input of a multiplexer to select the data that will be transferred. However, many timing verification tools have difficulty verifying the timing of such a circuit. Typically, such timing tools require that clock signals only be provided to clock inputs, and an error is generated if a clock signal is provided to a data input.

In accordance with the present invention, a clock signal is converted into a data signal that mimics the clock signal. The present invention performs this task by performing the following steps:
1. Divide the clock signal by two to form a divided clock signal.
2. Perform an exclusive-OR operation on the divided clock signal delayed by one half of a period of the clock signal and the divided clock signal delayed by a full period of the clock signal.
3. Invert the result of the exclusive-OR operation.
4. Align the inverted result of the exclusive-OR operation with the clock signal to form the data signal that mimics the clock signal.

Note that the fourth step is optional and need only be performed if it is desired to align data signal that mimics the clock signal with the clock signal. This may be necessary if timing is critical. By performing these steps, the present invention creates a copy of a clock signal that has the characteristics of a data signal, thereby allowing the clock signal to be provided only to clock inputs, and the copy of the clock signal to be provided to only to data inputs.

The present invention requires relatively few gates to implement. In one embodiment, a circuit in accordance with the present invention can be implemented by four flip flops and an exclusive-OR gate. However, if it is not possible to dedicate any additional logic gates to implement the present invention in the physical circuit, a logical circuit in accordance with the present invention may be provided only in the circuit upon which timing verification will be performed. Alternatively (and preferably), the present invention may be provided in both the circuit that will be fabricated and the circuit upon which timing verification will be performed. Accordingly, the present invention provides a simple an elegant solution to the problems associated with performing timing verification upon circuits having data inputs that must be driven by clock signals.

Figure 1 shows a prior art circuit that transfers data from the clock domain of the clock signal CLK to the clock domain of the clock signal CLK_2X.

Figure 2 shows a circuit that implements the present invention by converting a clock signal into a data signal that mimics the clock signal.

Figure 3 shows a series of timing diagrams and is provides to facilitate a better understanding of the circuit of Figure 2.

Figure 4 illustrates how the prior art circuit of Figure 1 can be modified to use the data signal that mimics the clock signal generated by the circuit shown in Figure 2, in accordance with the present invention.

The present invention relates to a method and apparatus for generating a data signal that mimics a clock signal. A circuit in accordance with the present invention receives as inputs a clock signal CLK, and a second signal CLK_2X that has a known phase relationship with respect to the clock signal CLK such that the rising and falling edges of CLK occur just after the active edge of CLK_2X, and the frequency of CLK_2X is twice that of CLK. Such a phase relationship will exist, for example, if a simple divide-by-two flip flop is used to generate the clock signal CLK from the signal CLK_2X. In many digital circuits, it is common to use such a divide-by-two flip flop to generate a primary system clock from a signal having twice the frequency of the primary system clock.

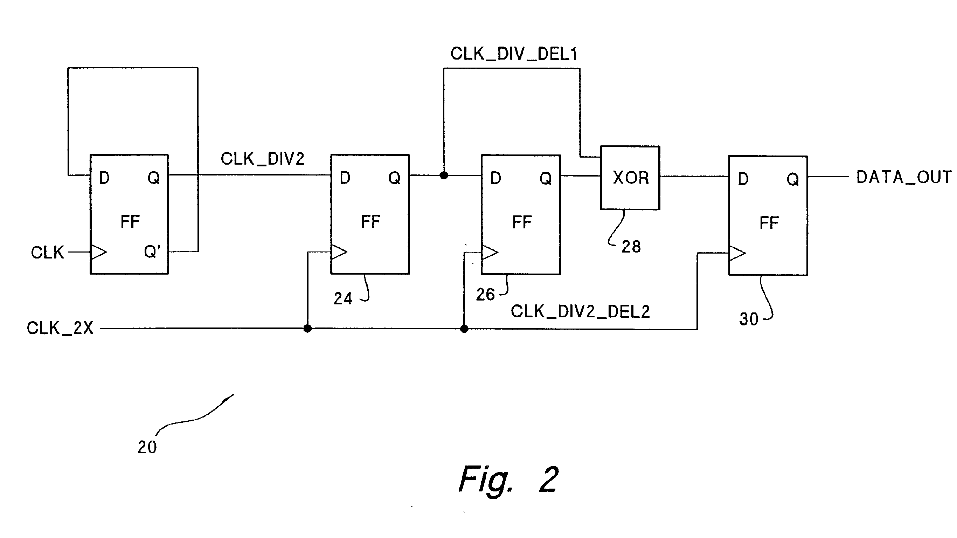

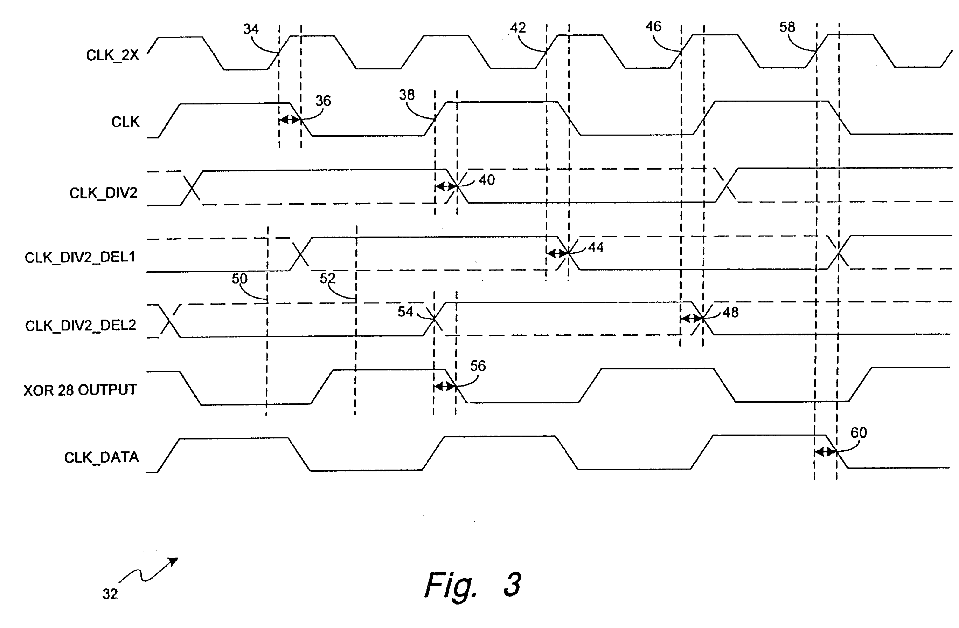

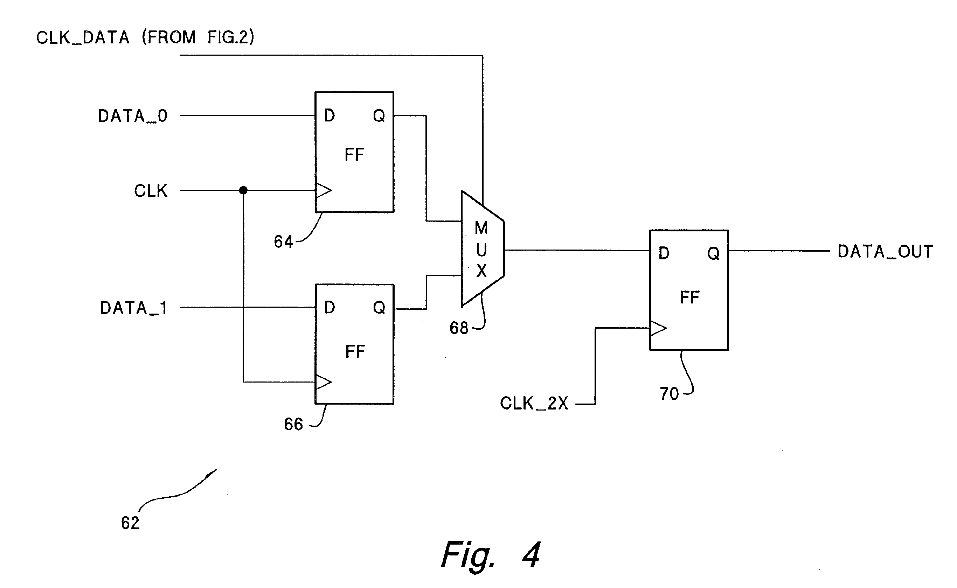

Figure 2 shows a circuit 20 that implements the present invention. Circuit 20 includes flip flops 22, 24, 26, and 30, and XOR gate 28. The clock signal CLK, which is to be converted into a data signal that mimics the clock signal, is presented to the clock input of flip flop 22. This flip flop is configured to divide the signal CLK by two, with the inverting output Q' of flip flop 22 coupled to the D input of flip flop 22. The signal CLK_DIV2 is derived at the Q output of flip flop 22 and is provided to the D input of flip flop 24. Flip flop 24, as well as flip flops 26 and 30, are clocked by the signal CLK_2X.

Flip flop 24 delays the signal CLK_DIV2 by one cycle of the signal CLK_2X (or alternatively, one half of a cycle of the clock signal CLK), and produces the signal CLK_DIV2_DEL1 at its Q output. The signal CLK_DIV2_DEL1 is provided the D input of flip flop 26 and one input of XOR gate 28.

Similarly, flip flop 26 delays the signal CLK_DN2_DEL1 by one cycle of the signal CLK_2X (or alternatively, one half of a cycle of the clock signal CLK), and produces the signal CLK_DIV2_DEL2 at its Q output. The signal CLK_DIV2_DEL2 is provided to the other input of XOR gate 28.

As will be discussed in greater detail below with respect to the timing diagram shown in Figure 3, the output of XOR gate 28 is approximately equal to the inverse of the clock signal CLK, but is delayed slightly. Accordingly, the output of circuit 20 could be generated by inverting the output of XOR gate 28. However, to eliminate the delay and invert the output of XOR gate 28, the output of circuit 20 is generated by supplying the output of XOR gate 28 to the D input of flip flop 30. As mentioned above, flip flop 30 is clocked by the signal CLK_2X. The output of circuit 20 (CLK_DATA) is then provided at the output of flip flop 30. By delaying the output of XOR gate 28 by one clock cycle of the signal CLK_2X, the output of XOR gate 28 is inverted. Furthermore, since the clock signal CLK may be derived by supplying the signal CLK_2X to a divide-by-two flip flop, the timing of the signal CLK_DATA mimics the timing of the clock signal CLK.

Figure 3 shows a series of timing diagrams 32 that and are provide to facilitate a better understanding of circuit 20 of Figure 2. Figure 3 includes timing diagrams for the signals CLK_2X, CLK, CLK_DIV2, CLK_DIV2_DEL1, CLK_DIV2_DEL2, the output of XOR gate 28, and CLK_DATA.

As mentioned above, the clock signal CLK may be derived by applying the signal CLK_2X to a flip flop configured to divide CLK_2X by two. For example, the divide-by-two flip flop may be clocked at edge 34 by CLK_2X and the output of the divide-by-two flip flop will change at edge 36, with the clock signal CLK present at the output of the divide-by-two flip flop. Note that the interval between edges 34 and 36 represents the output delay of the divide-by-two flip flop. In the discussion that follows, all output delays are shown as being approximately equivalent. However, those skilled in the art will recognize that output delays may vary.

Returning to Figure 2, the clock signal CLK is provided to flip flop 22, which divides CLK by two and produces the signal CLK_DIV2, which is shown in Figure 3. Note that in Figure 3, the signal CLK_DIV2 is shown in both the inverted and non-inverted states because flip flop 22 may power-up in either state. One of the advantages provided by the present invention is that the state in which flip flop 20 begins operating does not matter, as will be seen below. Accordingly, circuit 20 does not require any type of initialization, such as a reset signal or phase pulse signal. In Figure 3, edge 38 represents an active edge of the clock signal CLK and edge 40 represents a resulting change in the CLK_DIV2 at the output of flip flop 22.

The signal CLK_DIV2 is provided to flip flop 24, which is clocked by the signal CLK_2X. Accordingly, at edge 42 flip flop 24 is clocked and the state of CLK_DIV2 at edge 42 is transferred to the output of flip flop 24 at edge 44 to form the signal CLK_DIV2_DEL1. Similarly, the signal CLK_DIV2_DEL1 is provided to flip flop 26, which is also clocked by CLK_2X. Therefore, at edge 46 flip flop 26 is clocked and the state of CLK_DIV2_DEL1 at edge 46 is transferred to the output of flip flop 26 at edge 48 to form the signal CLK_DIV2_DEL2.

Next the signals CLK_DIV2_DEL1 and CLK_DIV2_DEL2 are provided to XOR gate 28. Note that because of the nature of the XOR function, the state in which flip flop 22 begins operating does not matter. For example, at edge 50 the output of gate 28 will be low if either CLK_DIV2_DEL1 and CLK_DIV2_DEL2 are both high or if CLK_DIV2_DEL1 and CLK_DIV2_DEL2 are both low. Likewise, at edge 52 the output of gate 28 will be high if either CLK_DIV2_DEL 1 is high and CLK_DIV2_DEL2 is low, or if CLK_DIV2_DEL1 is low and CLK_DIV2_DEL2 is high.

Edges 54 and 56 represent the gate delay of XOR gate 28. Note that the output of gate 28 is the inverse of the clock signal CLK, except that the output of XOR gate 28 has been delayed by the output delay of XOR gate 28. Accordingly, the output of XOR gate 28 may be inverted and used as the data signal that mimics the clock signal. With the timing shown in Figure 3, this would work fine because the inverted output of XOR gate 28 would meet the setup and hold requirements of a data input, such as the select input of MUX 16 of Figure 1.

However, if the timing shown in Figure 3 is tighter, the previous edge of the inverted output of XOR gate 28 may get to close to the active edge of the clock signal CLK. Flip-flop 30 addresses this problem. By applying the output of XOR gate 28 to flip flop 30, the output of XOR gate 28 is inverted and aligned with the clock signal CLK to produce the signal CLK_DATA. This is shown at edge 58, where flip flop 30 is clocked by CLK_2X when the output of XOR gate 28 is low, and at edge 60 where the signal CLK_DATA goes low. Note that the signals CLK and CLK_DATA are perfectly aligned at edges 58 and 60.

Figure 4 illustrates how prior art circuit 10 of Figure 1 can be modified in accordance with the present invention. Circuit 62 of Figure 4 comprises flip flops 64, 66, and 70, and MUX 68. Circuit 62 is substantially similar to circuit 10, except that the select signal of MUX 68 is driven by the signal CLK_DATA from Figure 2. Note that in Figures 2 and 4, the signals CLK and CLK_2X are only used to drive flip flops, and all data inputs are driven by data signals. Accordingly, the vast majority of timing analysis tools can be used with circuit 20 of Figure 2 and circuit 62 of Figure 4 without producing errors.

A logic designerusing the present invention may adopt two different strategies. First, if it is not possible to dedicate any additional logic gates to implement the present invention in the physical circuit, a logical circuit in accordance with the present invention (as shown in Figures 2 and 4) may be provided only in the circuit upon which timing verification will be performed, and the designer can specify that the physical circuit be designed in a manner similar to that shown in Figure 1. This strategy has the advantage of saving logic gates. However, this strategy introduces the added complication of having to maintain two separate logic models, one for timing simulation and one for fabrication. In general, a logic designer always assumes additional risk when the design that is verified by timing analysis tools differs from the design that is actually fabricated.

The second (and preferred) strategy is to simply include circuit 20 of Figure 2 in the final design. Logic gates are relatively inexpensive, and circuit 20 requires relatively few gates to implement. Circuit 20 can be provided once for each integrated circuit, and CLK_DATA can be fanned out to all the data inputs where it is necessary to use the clock signal as a data signal, or multiple instances of circuit 20 can be provided as needed. This strategy eliminates the need to have two separate models for verification and fabrication, and ensures that the design that is actually being fabricated has been verified.

The present invention can be described by the following steps:
1. Divide a clock signal by two to form a divided clock signal.
2. Perform an exclusive-OR operation on the divided clock signal delayed by one half of a period of the clock signal and the divided clock signal delayed by a full period of the clock signal.
3. Invert the result of the exclusive-OR operation.
   Note that the third step can be combined with the second step by performing an exclusive-NOR operation instead of an exclusive-OR operation. In addition, the present invention may include an optional fourth step:
4. Align the inverted result of the exclusive-OR operation with the clock signal.

As explained above, the third and fourth steps can be performed by a flip flop, such as flip flop 30 in Figure 2.

The present invention creates a copy of a clock signal that has the characteristics of a data signal, thereby allowing the clock signal to be provided only to clock inputs, and the copy of the clock signal to be provided to only to data inputs. Accordingly, the present invention provides a simple and elegant solution to the problems associated with performing timing verification upon circuits having clock signals driving data inputs.

Although the present invention has been described with reference to preferred embodiments, workers skilled in the art will recognize that changes may be made in form and detail without departing from the scope of the invention.

## Claims

1. A method of creating a data signal that mimics a clock signal comprising:
dividing the clock signal by two to form a divided clock signal;
forming a first delayed divided clock signal by delaying the divided clock signal by one half of a period of the clock signal;
forming a second delayed divided clock signal by delaying the divided clock signal by a full period of the clock signal;
performing an exclusive-OR operation upon the first and second delayed divided clock signals to form an intermediate signal; and
forming the data signal that mimics the clock signal by inverting the intermediate signal.

2. A method of supplying a data signal that mimics a clock signal to data inputs in a circuit that has clock inputs that must be driven by the clock signal and data inputs that require a signal having characteristics of the clock signal but cannot be driven by the clock signal, the method comprising:
dividing the clock signal by two to form a divided clock signal;
forming a first divided clock signal by delaying the divided clock signal by one half of a period of the clock signal;
forming a second delayed divided clock signal by delaying the divided clock signal by a full period of the clock signal;
performing an exclusive-OR operation upon the first and second delayed divided clock signals to form an intermediate signal;
forming the data signal that mimics the clock signal by inverting the intermediate signal; and
supplying the data signal that mimics the clock signal to the data inputs that require a signal having characteristics of the clock signal but cannot be driven by the clock signal.

3. A method of performing timing verification upon a circuit having data inputs that must be driven by a clock signal comprising:
identifying the data inputs that must be driven by the clock signal;
disconnecting the data inputs that must be driven by the clock signal from the clock signal;
dividing the clock signal by two to form a divided clock signal;
forming a first delayed divided clock signal by delaying the divided clock signal by one half of a period of the clock signal;
forming a second delayed divided clock signal by delaying the divided clock signal by a full period of the clock signal;
performing an exclusive-OR operation upon the first and second delayed divided clock signals to form an intermediate signal;
forming a data signal that mimics the clock signal by inverting the intermediate signal;
connecting the data signal that mimics the clock signal to the data inputs that must be driven by the clock signal to form a modified circuit; and
performing timing verification upon the modified circuit.

4. The method of any preceding claim, wherein forming a second delayed divided clock signal by delaying the divided clock signal by a full period of the clock signal comprises:
forming a second delayed divided clock signal by delaying the first delayed divided clock signal by one half a period of the clock signal.

5. The method of any preceding claim, wherein forming the data signal that mimics the clock signal by inverting the intermediate signal comprises:
forming the data signal that mimics the clock signal by inverting the intermediate signal to form an inverted intermediate signal and aligning the inverted intermediate signal with the clock signal.

6. A circuit comprising:
functional blocks having clock inputs;
functional blocks having data inputs, wherein at least one functional block having a data input must be driven by a signal having characteristics of a clock signal;
a divider circuit that divides the clock signal by two to form a divided clock signal;
a first delay circuit that delays the divided clock signal by one half of a period of the clock signal to forma first delayed divided clock signal;
a second delay circuit that delays the divided clock signal by one full period of the clock signal to form a second delayed divided clock signal;
an exclusive-OR gate that receives the first and second delayed divided clock signals and produces an intermediate signal; and
an inverter that inverts the intermediate signal to form a data signal that mimics the clock signal, wherein the data signal that mimics the clock signal is provided to the data inputs of the functional blocks having data inputs that must be driven by a signal having characteristics of a clock signal.

7. The circuit of claim 6, wherein the divider circuit comprises:
a flip flop that receives the clock signal at a clock input of the flip flop, has an inverted Q output coupled to a D input of the flip flop, and produces divided clock signal t a Q output of the flip flop.

8. The circuit of claim 6 or 7, wherein the first delay circuit comprises:
a flip flop that receives the divided clock signal at a D input of the flip flop, receives a doubled clock signal at a clock input of the flip flop, wherein the doubled clock signal has a frequency twice that of the clock signal, and produces a first delayed divided clock signal at a Q output of the flip flop.

9. The circuit of any of claims 6 to 8, wherein the second delay circuit comprises:
a flip flop that receives the first delayed divided clock signal at a D input of the flip flop, receives a double clock signal at a clock input of the flip flop, wherein the doubled clock signal has a frequency twice that of the clock signal, and produces a second delayed divided clock signal at a Q output of the flip flop.

10. The circuit of any of claims 6 to 9, wherein the inverter comprises:
a flip flop that receives the intermediate signal at a D input of the flip flop, receives a doubled clock signal at a clock input of the flip flop, wherein the doubled clock signal has a frequency twice that of the clock signal, and produces the data signal that mimics the clock signal a Q output of the flip flop.

11. A circuit for creating a data signal that mimics a clock signal comprising:
a first flip flop having a clock input coupled to the clock signal, an inverted Q output coupled to a D input, and a Q output;
a second flip flop having a D input coupled to the Q output of the first flip flop, a clock input coupled to a doubled clock signal having a frequency twice that of the clock signal, and a Q output;
a third flip flop having a D input coupled to the Q output of the second flip flop, a clock input coupled to the doubled clock signal, and a Q output;
an exclusive-OR gate having first and second inputs coupled to the Q outputs of the second and third flip flops, respectively, and an output; and
a fourth flip flop having a D input coupled to the output of the exclusive-OR gate, a clock input coupled to the doubled clock signal, and a Q output, wherein the data signal that mimics the clock signal is provided at the Q output of the fourth flip flop.
